# EUROPÄISCHE PATENTANMELDUNG

(11) **EP 4 344 550 A1**
(43) Veröffentlichungstag der Anmeldung: **03.04.2024**
(21) Anmeldenummer: 22199067.4
(22) Anmeldetag: 30.09.2022
(51) Int. Cl.: A22C 25/16

(54) **VORRICHTUNG ZUM LÖSEN VON FLEISCH VON EINEM GRÄTENGERÜST ODER TEILEN DAVON UND VORRICHTUNG UND VERFAHREN ZUM AUTOMATISCHEN VERARBEITEN VON PRODUKTEN DER NAHRUNGSMITTEL VERARBEITENDEN INDUSTRIE**

(71) Anmelder: NORDISCHER MASCHINENBAU RUD. BAADER GMBH + CO KG, 23560 Lübeck (DE)
(72) Erfinder: Tychsen, Werner, 23560 Lübeck (DE)
(74) Vertreter: Stork Bamberger Patentanwälte PartmbB

(57) **Zusammenfassung**

Die Erfindung betrifft eine Vorrichtung (10), ausgebildet und eingerichtet zum Lösen von Fleisch von einem Grätengerüst (11) oder Teilen davon, umfassend mindestens eine Schneideinheit (12), die mindestens einen Messerträger (13) mit einer drehbar im Messerträger (13) gelagerten Messerwelle (14) umfasst, wobei auf der Messerwelle (14) ein Kreismesser (15) formschlüssig und/oder kraftschlüssig und gegenüber der Messerwelle (14) verdrehfest angeordnet und fixiert ist, sowie einen Antrieb (16) zum rotierenden Antreiben der Messerwelle (14), die sich dadurch auszeichnet, dass das Kreismesser (15) zusätzlich zu einer Ausnehmung (21) zum Aufbringen auf die Messerwelle und ggf. zur Herstellung des Formschlusses mit der Messerwelle (14) im Bereich einer durch das Kreismesser (15) aufgespannten Kreismesserebene mindestens einen Bereich reduzierter Materialstärke aufweist. Die Erfindung befasst sich weiterhin mit einer entsprechenden Vorrichtung (36) und einem entsprechenden Verfahren zum automatischen Verarbeiten von Produkten der Nahrungsmittel verarbeitenden Industrie.

## Beschreibung

Die Erfindung betrifft eine Vorrichtung, ausgebildet und eingerichtet zum Lösen von Fleisch von einem Grätengerüst oder Teilen davon, umfassend mindestens eine Schneideinheit, die mindestens einen Messerträger mit einer drehbar im Messerträger gelagerten Messerwelle umfasst, wobei auf der Messerwelle ein Kreismesser formschlüssig und/oder kraftschlüssig und gegenüber der Messerwelle verdrehfest angeordnet und fixiert ist, sowie einen Antrieb zum rotierenden Antreiben der Messerwelle.

Die Erfindung betrifft weiterhin eine Vorrichtung zum automatischen Verarbeiten von Produkten der Nahrungsmittel verarbeitenden Industrie, insbesondere zum Verarbeiten von geschlachteten, in der Bauchhöhle geöffneten und entweideten Fischen, umfassend eine Transporteinheit, ausgebildet und eingerichtet zum Transportieren der zu verarbeitenden Produkte in Transportrichtung T entlang eines Transportpfads durch mindestens eine Bearbeitungsstation, mindestens eine Bearbeitungsstation zum Verarbeiten der Produkte, nämlich eine Vorrichtung zum Lösen von Fleisch von einem Grätengerüst oder Teilen davon, sowie eine Steuerungseinrichtung zum Steuern der Transporteinheit und der oder jeder Bearbeitungsstation.

Die Erfindung befasst sich auch mit einem Verfahren zum automatischen Verarbeiten von Produkten der Nahrungsmittel verarbeitenden Industrie, insbesondere zum Verarbeiten von geschlachteten, in der Bauchhöhle geöffneten und entweideten Fischen.

Solche Vorrichtungen und Verfahren kommen insbesondere in der Nahrungsmittel verarbeitenden Industrie und besonders bevorzugt bei der Verarbeitung von Fisch zum Einsatz. Die bekannten Vorrichtungen zum Lösen von Fleisch vom Grätengerüst dienen z.B. dazu, das später als Fischfilet gewonnene Fleisch vom Grätengerüst zu lösen. Beispielhaft ist das Freischneiden der Bauchgräten und der Rückengräten genannt, bei dem zwei Kreismesser zu beiden Seiten der Bauchgräten bzw. der Rückengräten positioniert sind. Mittels der Vorrichtung zum Lösen des Fleisches vom Grätengerüst wird das Fleisch entlang der Gräten von diesen gelöst. Für eine optimale Ausbeute ist es erforderlich, möglichst nahe an den Gräten entlang zu schneiden, so dass möglichst kein Fleisch an den Gräten verbleibt. Die gattungsgemäßen Vorrichtungen und das Verfahren kommen jedoch auch in anderen Bereichen der Nahrungsmittel verarbeitenden Industrie, insbesondere der Fischverarbeitung, nämlich zum Beispiel beim Flankenschnitt oder beim Strunkschnitt im Rahmen der Verarbeitung von Fisch, zum Einsatz. Die Vorrichtung zum Lösen des Fleisches vom Grätengerüst kann als einzelne Bearbeitungsstation betrieben werden, ist jedoch bevorzugt Bestandteil der Vorrichtung zum automatischen Verarbeiten der Produkte.

Die Vorrichtung zum Lösen des Fleisches vom Grätengerüst oder Teilen davon beschreibt nicht nur das teilweise Trennen, also eine Art Anlösen des Fleisches von den Gräten, sondern kann auch das vollständige Abtrennen des Fleisches vom Grätengerüst bedeuten. Mit der Formulierung des Lösens von Fleisch vom Grätengerüst ist ganz allgemein jede Art von Fleisch also u.a. vom Schwein, vom Rind, insbesondere jedoch vom Geflügel und vom Fisch beschrieben, wobei das Grätengerüst bei einigen der Tierarten das Skelett bzw. einzelne Knochen des Skeletts beschreibt und lediglich beim Fisch vom Grätengerüst gesprochen wird.

Um die Kreismesser in eine gute Schneidposition, also möglichst nahe an die Gräten heran, bewegen zu können, kommen unterschiedliche Möglichkeiten der Verstellung der jeweiligen Schneid- oder Trennmesser zum Einsatz. Bekannte Vorrichtungen weisen z.B. Antriebe, insbesondere Servomotore oder Schrittmotore auf, mittels denen eine Verstellung ausführbar ist. Andere bekannte Ausführungsformen solcher Vorrichtungen umfassen z.B. pneumatische Komponenten zur Verstellung. Es ist weiterhin bekannt, die Trenn-/Schneidmesser selbst und/oder die die Trenn-/Schneidmesser tragenden Messerhalter federnd zu lagern. Diese bekannten Vorrichtungen weisen jedoch alle den gemeinsamen Nachteil auf, dass die technische Umsetzung aufwendig und damit kostenintensiv ist. Bei allen der bekannten Verstellmechanismen sind erhebliche Massen zu bewegen, die im Verhältnis zur Masse der Trenn-/Schneidmesser groß sind. Des Weiteren sind die bekannten Vorrichtungen bzw. deren Trenn-/Schneidmesser auf eine axiale Verstellung beschränkt. Mit anderen Worten ermöglichen die bekannten Lösungen nur eine Verstellung der Trenn-/Schneidmesser in einer Bewegungsachse quer zur Transportrichtung auf die zu verarbeitenden Produkte zu und wieder zurück. Sämtliche Nachteile führen zu einer ineffektiven und hinsichtlich der Ausbeute begrenzten Gewinnung von Fleisch vom Grätengerüst.

Es ist daher Aufgabe der vorliegenden Erfindung, eine einfache und effiziente Vorrichtung zum Lösen von Fleisch sowie zum automatischen Verarbeiten von Produkten der Nahrungsmittel verarbeitenden Industrie zu schaffen. Des Weiteren ist es Aufgabe der Erfindung, ein entsprechendes Verfahren vorzuschlagen.

Diese Aufgabe wird durch eine Vorrichtung zum Lösen von Fleisch von einem Grätengerüst mit den eingangs genannten Merkmalen dadurch gelöst, dass das Kreismesser zusätzlich zu einer Ausnehmung zum Aufbringen auf die Messerwelle und ggf. zur Herstellung des Formschlusses mit der Messerwelle im Bereich einer durch das Kreismesser aufgespannten Kreismesserebene mindestens einen Bereich reduzierter Materialstärke aufweist. Durch die Materialreduzierung ist das Kreismessers flexibel. Anders ausgedrückt lässt sich das Kreismesser aufgrund bestehender, kontrollierter Instabilität auslenken bzw. biegen, insbesondere durch Kontakt mit dem zu verarbeitenden Produkt selbst, wodurch eine enge Schnittführung entlang und auf den Gräten des zu verarbeitenden Produktes gewährleistet ist, ohne in die Gräten einzuschneiden. Das flexible Kreismesser ermöglicht durch den oder jeden Bereich reduzierter Materialstärke eine passive Steuerung des Kreismessers für eine ausbeutestarke Verarbeitung. Der oder jeder Bereich kann zufällig über eine durch das Kreismesser definierte Kreismesserebene verteilt ausgebildet sein. Bevorzugt ist der oder jeder Bereich insbesondere um die Messerwelle herum ausgebildet, um ein Bewegen bzw. Kippen des Kreismessers um eine Bewegungsachse zu erleichtern.

Vorteilhafterweise ist die Materialstärke in dem mindestens einen Bereich null, derart, dass mindestens ein Durchbruch gebildet ist. Durch den oder jeden Durchbruch ist das Kreismesser einerseits flexibel genug, ausgelenkt zu werden, und andererseits stabil genug, eine definierte Schnittführung auszuführen. Die Größe des oder jedes Durchbruches sowie dessen Form kann unterschiedlich gewählt sein und von Anwendung zu Anwendung variieren.

Eine bevorzugte Weiterbildung der Vorrichtung ist dadurch gekennzeichnet, dass jeder Durchbruch als eine Öffnung in der durch das Kreismesser aufgespannten Kreismesserebene ausgebildet ist, derart, dass eine Innenfläche des Kreismessers mit einer Außenfläche des Kreismessers verbunden ist.

Eine besonders vorteilhafte Ausführungsform der Vorrichtung ist dadurch gekennzeichnet, dass jedes Kreismesser mehrere zusätzliche Durchbrüche aufweist, die als Evolvente oder ähnlich einer Evolvente ausgebildet sind. Mit den Durchbrüchen als Evolvente oder ähnlich einer Evolvente ist eine besonders zwischen Flexibilität und Stabilität ausgewogene Ausbildung des Kreismessers geschaffen. Eine solche Ausbildung kann auch ein Taumeln des Kreismessers während des Betriebs des Kreismessers unterdrücken bzw. auf ein tolerierbares Maß reduzieren.

Zweckmäßigerweise ist jeder Durchbruch beabstandet zur Schneidkante des Kreismessers außerhalb des Eingriffsbereichs des Kreismessers in das zu verarbeitende Produkt ausgebildet. Die Fläche der Durchbrüche bezogen auf die Gesamtfläche der Kreismesserebene des Kreismessers beträgt etwa 90 % bis 20% und vorzugsweise etwa 60% bis 30% und besonders bevorzugt etwa 50% bis 40%. Die Anzahl der Durchbrüche sowie deren Größe und einnehmende Gesamtfläche kann je nach Anwendungsfall variieren, um die Flexibilität zu erhöhen oder zu reduzieren.

Vorteilhafterweise weist eine Schneidkante jedes Kreismessers zwei Fasen auf, wobei die dem zu lösenden Fleisch zugewandte Fase länger ist als die dem Fleisch abgewandte Fase. Die Anzahl und Ausbildung der Fasen können variieren. Durch eine Ausbildung, bei der die Fase, die der Gräte, von dem das Fleisch zu lösen ist, zugewandt ist, kleiner ist als die Fase, die dem zu lösenden Fleisch zugewandt ist, besteht die Möglichkeit, sogar ohne eine aktive Verstellung oder Steuerung, dass sich das flexible ("weiche") Kreismesser in Kombination den Fasen selbst an die Gräte heranführt, sobald sich das Kreismesser in Eingriff befindet, um dann auf der Gräte entlangzugleiten.

Vorzugsweise ist das Kreismesser auf der Messerwelle zwischen einem Anschlag der Messerwelle und einem auf der Seite des freien Endes der Messerwelle angeordneten Sicherungsmittel gehalten und fixiert, wobei wahlweise zwischen dem Kreismesser und dem Anschlag und/oder zwischen dem Kreismesser und dem Sicherungsmittel mindestens ein Ausgleichselement angeordnet ist. Eine formschlüssige Verbindung zwischen dem Kreismesser und der Messerwelle kann z.B. mit mindestens einer Passfeder- Nut-Verbindung hergestellt werden. Andere Verbindungen, mit denen das Kreismesser durch die Rotation der Messerwelle mitgenommen wird, sind ebenfalls einsetzbar. Hier sind insbesondere kraftschlüssige Verbindungen genannt. Das oder jedes Ausgleichselement ermöglicht zusätzlich zur Flexibilität durch den oder jeden Durchbruch kleine Ausgleichsbewegungen des Kreismessers auf der Messerwelle, insbesondere ein Kippen des Kreismessers, z.B. ausgelöst durch den Fisch selbst. Durch das oder jedes Ausgleichselement ist die Schaffung eines gesteuerten Kreismessers unterstützt. Wird das Kreismesser durch eine äußere Kraft, die auch vom Fisch selbst kommen kann, indem das Kreismessers auf den Gräten des Fisches gleitet, verstellt, also z.B. auseinander- bzw. vom Fisch weggedrückt, gibt das Ausgleichselement nach, so dass sich das Kreismesser in engem Rahmen, z.B. im Bereich von 1-3mm, bewegen kann. Dabei muss letztlich keine Masse wirklich bewegt werden, sondern nur um eine Kippachse gekippt werden. Damit ist ein sehr dynamisches System mit einem nachgiebigen Kreismesser geschaffen, was eine präzise und effiziente Ausbeute ermöglicht. Die erfindungsgemäße Lösung weist eine sehr einfache Bauform auf, wodurch sich insbesondere auch bestehende Systeme leicht nachrüsten lassen.

Zweckmäßigerweise umfasst die Vorrichtung zwei Schneideinheiten, die vorzugsweise baugleich ausgebildet und spiegelsymmetrisch zu beiden Seiten eines Transportpfads für die zu verarbeitenden Produkte beabstandet zueinander angeordnet sind, derart, dass zwischen den beiden Kreismessern ein Transportpfad für die zu verarbeitenden Produkte gebildet ist. Die zwei Kreismesser der beiden Schneideinheiten greifen zeitgleich oder zeitversetzt voneinander von gegenüberliegenden Seiten am zu verarbeitenden Produkt an, beispielsweise zu beiden Seiten von Bauchgräten oder Rückengräten. Die zwei Schneideinheiten können eine gemeinsame, durchgehende Messerwelle aufweisen, umfassen bevorzugt aber separate Messerwellen. Für die Schneideinheiten kann ein gemeinsamer Antrieb vorgesehen sein. Vorzugsweise umfasst jede Schneideinheit einen separaten Antrieb, wobei die Antriebe mittels einer Steuerungseinrichtung asynchron oder synchron ansteuerbar sind.

Eine besonders bevorzugte Ausführungsform der erfindungsgemäßen Vorrichtung ist dadurch gekennzeichnet, dass mindestens ein Gleitkörper vorgesehen ist, der radial beabstandet zur Messerwelle angeordnet und gegen das Kreismesser drückbar ausgebildet ist. Der oder jeder Gleitkörper kann als eine Art passiver Fixanschlag für das Kreismesser dienen, um z.B. das Kreismesser vor einer Überlastung im plastischen Bereich zu schützen, oder um ein Taumeln des Kreismessers zu unterdrücken, kann aber auch als Steuermittel zum aktiven Verstellen der Kreismessers für eine optimierte Schnittposition ausgebildet und eingerichtet sein. Der Gleitkörper kann ein einfacher Gleitklotz sein. Optional kann jeder Gleitkörper auch eine in der Form eines Kreissegments ausgebildete Gleitplatte oder dergleichen sein. Jeder Gleitkörper ist so ausgeführt und eingerichtet, dass ein hydrodynamisches Gleiten zwischen Gleitkörper und Kreismesser sichergestellt ist.

Der oder jeder Gleitkörper kann auf der dem zu verarbeitenden Produkt zugewandten Innenseite des Kreismessers positioniert sein. Damit wird das erwünschte Gleiten des Kreismessers entlang bzw. auf den Gräten besonders unterstützt. Mit der Anordnung eines einzelnen Gleitkörpers wird nur eine geringe Belastung auf das Kreismesser ausgeübt, wodurch das Kreismesser eine hohe Nachgiebigkeit behält sowie nur eine geringe Verspannung und damit eine höhere Standzeit aufweist. Mit der Anordnung des oder jedes Gleitkörpers auf der dem zu verarbeitenden Produkt zugewandten Innenseite kann besonders gut auf eine Verarbeitung von Fisch reagiert werden, dessen Grätendicke unbekannt ist. In anderen Fällen kann der oder jeder Gleitkörper auch auf der Außenseite des Kreismessers platziert sein, um das oder jedes Kreismesser zum "Einführen" des Fisches bzw. der jeweiligen Gräte aufzusteuern. Sobald der Fisch dann angeschnitten ist, erfolgt die Freigabe des Kreismessers durch den oder jeden Gleitkörper, indem der oder jeder Gleitkörper außer Kontakt mit dem Kreismesser gebracht wird. Letztlich ist aber auch eine Kombination aus aktiven und passiven Gleitkörpern auf der Innenseite und/oder der Außenseite der Kreismesser einsetzbar.

Vorzugsweise ist der oder jeder Gleitkörper außerhalb des Eingriffsbereiches des Kreismessers in das zu verarbeitende Produkt, vorzugsweise unterhalb oder oberhalb der Drehachse der Messerwelle, zur Anlage an der dem zu verarbeitenden Produkt zugewandten Innenseite des Kreismessers angeordnet. Die Position des oder jedes Gleitkörpers oberhalb oder unterhalb hängt davon ab, was genau geschnitten werden soll. Beim Schneiden von Rückengräten liegen Gleitkörper oberhalb der Messerwelle. Beim Schneiden von Bauchgräten liegen Gleitkörper unterhalb der Messerwelle. Dadurch ist es auf einfache Weise möglich, den Bereich des Kreismessers, der in Eingriff mit dem zu verarbeitenden Produkt bringbar ist, näher in Richtung der Gräten des zu verarbeitenden Produktes zu drücken. Die Position des oder jedes Gleitkörpers außerhalb des Eingriffsbereiches ermöglicht eine Mehrfachansteuerung, so dass das Kreismesser individuell an die jeweilige Form des zu verarbeitenden Produktes anpassbar ist.

Der Gleitkörper kann eine passive Wirkung haben. Vorzugsweise ist der oder jeder Gleitkörper jedoch aktiv steuerbar. Dazu sind Steuermittel, wie z.B. eine Spindel, ein Pneumatikzylinder oder dergleichen vorgesehen, die mit einer Steuerungseinrichtung verbunden sind. Je nach Positionierung des oder jedes Gleitkörpers kann das Kreismesser axial oder um andere Bewegungsachsen verstellt werden.

Vorzugsweise umfasst die Vorrichtung eine Steuerungseinrichtung. An die Steuerungseinrichtung können einzelne Komponenten oder alle Komponenten der Vorrichtung angeschlossen sein, beispielsweise die Antriebe für die Kreismesser, die Steuermittel für den oder jeden Gleitkörper und andere Komponenten für eine automatisierte Verarbeitung.

Die Aufgabe wird auch durch eine eingangs genannte Vorrichtung zum automatischen Verarbeiten gelöst, die sich dadurch auszeichnet, dass die Vorrichtung zum Lösen nach einem oder mehreren der Ansprüche 1 bis 13 ausgebildet und eingerichtet ist. Die sich daraus ergebenden Vorteile wurden bereits im Zusammenhang mit der Vorrichtung zum Lösen beschrieben, weshalb zur Vermeidung von Wiederholungen auf die entsprechenden Passagen verwiesen wird.

Die Aufgabe wird auch durch ein eingangs genanntes Verfahren gelöst, das gekennzeichnet ist durch die Schritte: Transportieren der zu verarbeitenden Produkte entlang eines Transportpfads in den Bereich mindestens einer Bearbeitungsstation und durch diese hindurch mittels einer Transporteinheit, Verarbeiten der Produkte in der Bearbeitungsstation mittels derselben, indem Fleisch mittels einer Vorrichtung zum Lösen von Fleisch von einem Grätengerüst oder Teilen davon vom Grätengerüst gelöst wird, wobei die Verfahrensschritte zum automatischen Ausführen mittels einer Steuerungseinrichtung gesteuert werden, und ein Kreismesser der Vorrichtung zum Lösen des Fleisches unabhängig von der Steuerungseinrichtung beim Ausführen des Löseschrittes bezüglich seiner Position zum Grätengerüst durch ein flexibel ausgebildetes Kreismesser passiv durch das zu verarbeitende Produkt gesteuert wird. Dadurch, dass das passive Steuern des Kreismessers über die flexible Ausbildung des Kreismessers erfolgt, kann auf aufwendige und komplexe Konstruktionen für eine passive Steuerung verzichtet werden. Durch das passive Steuern des Kreismessers mithilfe der flexiblen Ausbildung des Kreismessers müssen nur sehr geringe Massen bewegt bzw. lediglich gekippt werden, wodurch eine individuelle Anpassung des Kreismessers an das zu verarbeitende Produkt für eine maximale Ausbeute einfach und zuverlässig sichergestellt ist.

Vorzugsweise wird das Kreismesser unabhängig von der Steuerungseinrichtung beim Ausführen des Löseschrittes bezüglich seiner Position zum Grätengerüst durch eine eine Ausgleichsbewegung des Kreismessers auf einer Messerwelle zulassenden Lagerung des Kreismessers auf der Messerwelle passiv durch das zu verarbeitende Produkt gesteuert. Dadurch, dass das passive Steuern des Kreismessers zusätzlich zu dessen flexibler Ausbildung über die Lagerung des Kreismessers auf der Messerwelle erfolgt, kann auf aufwendige und komplexe Konstruktionen für eine passive Steuerung verzichtet werden. Durch das passive Steuern des Kreismessers mithilfe der Lagerung des Kreismessers auf der Messerwelle müssen nur sehr geringe Massen bewegt bzw. lediglich gekippt werden, wodurch eine individuelle Anpassung des Kreismessers an das zu verarbeitende Produkt für eine maximale Ausbeute einfach und zuverlässig sichergestellt ist.

Vorzugsweise wird das Kreismesser zusätzlich zur passiven Steuerung durch mindestens einen Gleitkörper beim Lösen des Fleisches vom Grätengerüst aktiv gesteuert, indem der oder jeder Gleitkörper aktiv und mit einstellbarem Druck von einer dem zu verarbeitenden Produkt zugewandten Innenseite des Kreismessers gegen das Kreismesser gedrückt wird. Dadurch kann das Kreismesser noch enger und näher an die freizuschneidenden Gräten herangedrückt werden. Der oder jeder Gleitkörper steht in Kontakt mit dem Kreismesser, und zwar im Bereich einer durch das Kreismesser aufgespannten Ebene, oder wird in Kontakt mit diesem gebracht. Durch Stellmittel kann der Druck individuell variiert werden, um die Größe der Auslenkung/den Betrag des Kippens des Kreismessers auf der Messerwelle zu verstellen.

Vorteilhafterweise werden zwei oder mehr Gleitkörper separat zueinander angesteuert, um an unterschiedlichen Positionen des Kreismessers in Kontakt mit diesem gebracht zu werden. Dadurch ist ein Einstellen des Kreismessers um mehrere Bewegungsachsen gewährleistet, wodurch eine noch individuellere und ausbeuteoptimierte Einstellung des Kreismessers sichergestellt ist.

Zweckmäßigerweise wird die Kontaktfläche zwischen dem oder jedem Gleitkörper und dem Kreismesser mindestens während der Verarbeitung gekühlt, wodurch eine zuverlässige Verarbeitung mit langen Standzeiten der Kreismesser gewährleistet wird.

Eine bevorzugte Weiterbildung des Verfahrens ist dadurch gekennzeichnet, dass die Position jedes Gleitkörpers vor und/oder während der Verarbeitung zur Veränderung der Position der Kontaktfläche zwischen dem Gleitkörper und dem Kreismesser radial zu einer Drehachse der Messerwelle und/oder um die Drehachse der Messerwelle herum verändert wird. Mit der Variation der Kontaktposition der Gleitkörper zum Kreismesser können die Gleitkörper an unterschiedlichen Bereichen des Kreismessers außerhalb des Eingriffsbereiches angreifen und damit nahezu beliebig viele Bewegungsachsen schaffen, so dass das Kreismessers individuell und präzise eingestellt werden kann.

Besonders bevorzugt wird das Verfahren mit einer Vorrichtung zum Lösen von Fleisch von einem Grätengerüst oder Teilen davon nach einem oder mehreren der Ansprüche 1 bis 13 bzw. mit einer Vorrichtung zum automatischen Verarbeiten von Produkten der Nahrungsmittel verarbeitenden Industrie, insbesondere zum Verarbeiten von geschlachteten, in ihrer Bauchhöhle geöffneten und entweideten Fischen nach Anspruch 14 ausgeführt.

Weitere sich aus den einzelnen Verfahrensschritten ergebenden Vorteile wurden bereits im Zusammenhang mit der Vorrichtung beschrieben, weshalb zur Vermeidung von Wiederholungen auf die entsprechenden Passagen verwiesen wird.

Weitere zweckmäßige und/oder vorteilhafte Merkmale und Weiterbildungen zur Vorrichtung und zu dem entsprechenden Verfahren ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung einer ersten Ausführungsform einer Vorrichtung zum Lösen von Fleisch von einem Grätengerüst oder Teilen davon in Seitenansicht,
- Fig. 2: das Kreismesser der Schneideinheit gemäß Figur 1,
- Fig. 3: eine schematische Darstellung einer weiteren Ausführungsform der Vorrichtung zum Lösen von Fleisch von einem Grätengerüst oder Teilen davon in Seitenansicht, und
- Fig. 4: eine schematische Darstellung einer ersten Ausführungsform einer Vorrichtung zum automatischen Verarbeiten von Produkten der Nahrungsmittel verarbeitenden Industrie, nämlich einer Vorrichtung zum Freischneiden von Rückengräten.

Die gezeigte und erfindungsgemäße Vorrichtung dient zum Lösen des Fleisches von Rückengräten eines geschlachteten, in der Bauchhöhle geöffneten und entweideten Fisches. Die erfindungsgemäßen Vorrichtungen sind in entsprechender Weise auch zum Lösen und Trennen von Fleisch anderer Gräten, insbesondere von Bauchgräten, Flankengräten und dergleichen, sowie zum Lösen und Trennen von Fleisch vom Knochen anderer tierischer Produkte einsetzbar. Selbstverständlich ist die erfindungsgemäße Vorrichtung in entsprechender Weise auch zum Lösen von Fleisch von Fischgräten vor dem Öffnen der Bauchhöhle und/oder vor dem Entweiden ausgebildet und eingerichtet. Mit anderen Worten ist die erfindungsgemäße Vorrichtung nicht nur im Zusammenhang mit einer dargestellten Sattelmaschine einsetzbar, sondern auch z.B. bei einem Bauchschnitt von unten, einem Strunkschnitt, Trennschnitten und diversen anderen Schnitten.

Die in der Zeichnung dargestellte Vorrichtung 10 ist zum Lösen von Fleisch von einem Grätengerüst 11 oder Teilen davon, konkret zum Freischneiden von Rückengräten 37 bzw. Lösen des Fleisches von den Rückengräten 37, ausgebildet und eingerichtet und umfasst mindestens eine Schneideinheit 12, die mindestens einen Messerträger 13 mit einer drehbar im Messerträger 13 gelagerten Messerwelle 14 umfasst, wobei auf der Messerwelle 14 ein Kreismesser 15 formschlüssig und/oder kraftschlüssig und gegenüber der Messerwelle 14 verdrehfest angeordnet und fixiert ist, sowie einen Antrieb 16 zum rotierenden Antreiben der Messerwelle 14.

Diese Vorrichtung 10 zeichnet sich erfindungsgemäß dadurch aus, dass das Kreismesser 15 zusätzlich zu einer Ausnehmung 21 zum Aufbringen auf die Messerwelle und ggf. zur Herstellung des Formschlusses mit der Messerwelle 14 im Bereich einer durch das Kreismesser 15 aufgespannten Kreismesserebene mindestens einen Bereich 42 reduzierter Materialstärke aufweist.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

In der bevorzugten Ausführungsform der Vorrichtung 10 ist die Materialstärke in dem mindestens einen Bereich null, derart, dass mindestens ein Durchbruch 34 gebildet ist. Jeder Durchbruch 34 ist als eine Öffnung in der durch das Kreismesser 15 aufgespannten Kreismesserebene ausgebildet, derart, dass eine Innenfläche I des Kreismessers 15 mit einer Außenfläche A des Kreismessers 15 verbunden ist. In der dargestellten Vorrichtung 10 weist jedes Kreismesser 15 mehrere zusätzliche Durchbrüche 34 auf, die als Evolvente oder ähnlich einer Evolvente ausgebildet sind. Beispielhaft sind zwölf einer Evolvente ähnliche Durchbrüche 34 ausgebildet, die sich ausgehend von einem im Bereich der Ausnehmung 21 befindlichen Ausgangspunkt bogenförmig in Richtung einer Schneidkante 35 des Kreismessers erstrecken. Jeder Durchbruch 34 ist beabstandet zur Schneidkante 35 des Kreismessers 15 außerhalb des Eingriffsbereichs des Kreismessers 15 in das zu verarbeitende Produkt ausgebildet bzw. endet beabstandet zur Schneidkante 35. Die Durchbrüche 34 können nur einen kleinen flächigen Anteil der Gesamtfläche der Kreismesserebene des Kreismessers 15 ausmachen. Vorzugsweise beträgt die Fläche der Durchbrüche 34 bezogen auf die Gesamtfläche der Kreismesserebene des Kreismessers 15 etwa 90 % bis 20% und vorzugsweise etwa 60% bis 30% und besonders bevorzugt etwa 50% bis 40%.

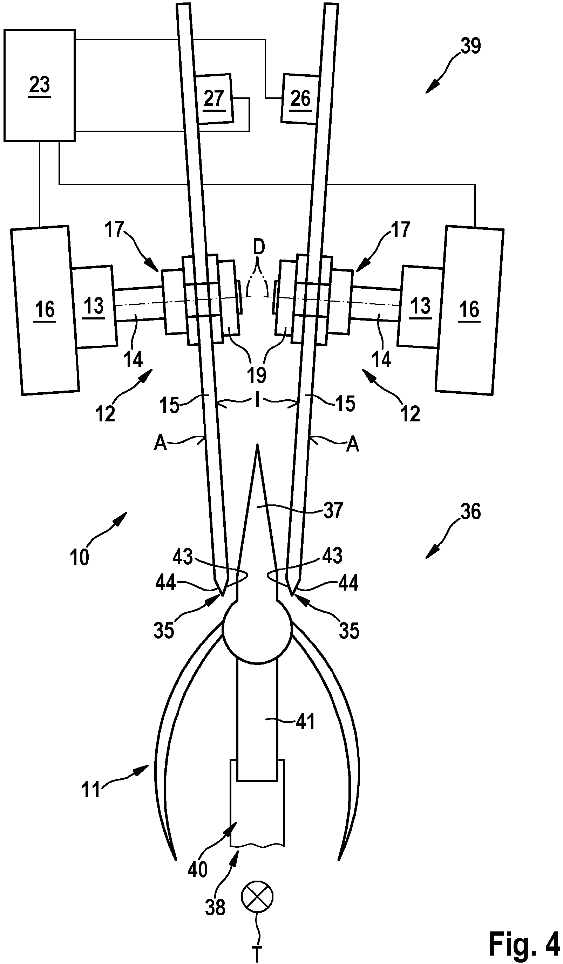

In der Figur 4 ist ein Kreismesser 15 dargestellt, das eine spezielle Schneidengeometrie aufweist. Die Schneidkante 35 des Kreismessers 15 umfasst zwei Fasen 43, 44. Eine der Fasen 43 ist der Rückengräte 37 zugewandt. Die andere Fase 44 ist dem zu lösenden Fleisch zugewandt. Die Fasen 43, 44 können symmetrisch ausgebildet sein. In der bevorzugten Ausführungsform ist die der Rückengräte 37 zugewandte Fase 43 kürzer ausgebildet als die dem Fleisch zugewandte Fase 44. Anders ausgedrückt ist die Fasenlinie der Fase 43 ausgehend von der Schneidkantenspitze kürzer als die Fasenlinie 44, so dass die Fase 44 bzw. der Fasenwinkel der Fase 44 "stumpfer" ist als die Fase 43 bzw. der Fasenwinkel der Fase 43.

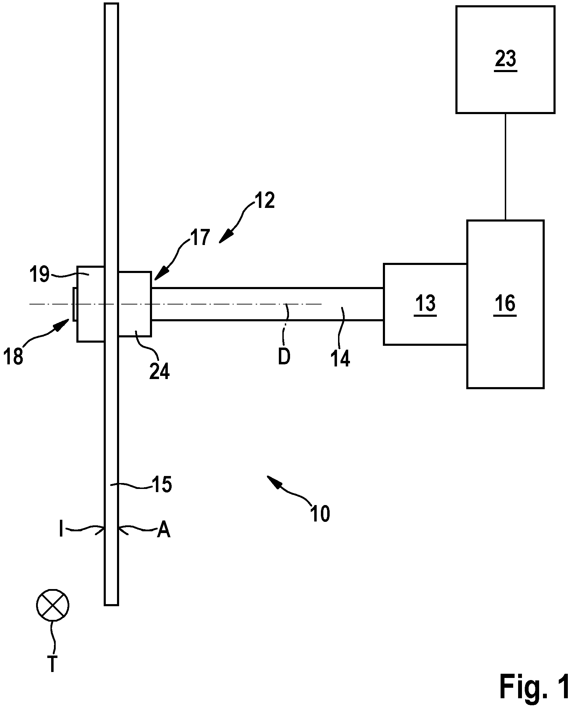

Das Kreismesser 15 weist die Ausnehmung 21 bzw. einen Durchbruch auf, der zur Aufnahme der Messerwelle 14 sowie ggf. zur Bildung einer Passfeder-Nut-Verbindung 22 mit der Messerwelle 14 ausgebildet ist. In der Figur 1 ist eine einzelne Schneideinheit 12 dargestellt. Die Vorrichtung 10 umfasst eine Steuerungseinrichtung 23, die mit dem Antrieb 16 für die Messerwelle 14 und damit für das Kreismesser 15 verbunden ist. Optional (siehe insbesondere Figur 4) kann die Vorrichtung 10 auch zwei Schneideinheiten 12 umfassen, die vorzugsweise baugleich ausgebildet und im Wesentlichen spiegelsymmetrisch zu beiden Seiten eines Transportpfads für die zu verarbeitenden Produkte beabstandet zueinander angeordnet sind, derart, dass zwischen den beiden Kreismessern 15 ein Transportpfad für die zu verarbeitenden Produkte gebildet ist. Der Einfachheit halber werden für die entsprechenden Komponenten beider Schneideinheiten 12 dieselben Bezugsziffern verwendet. Die Schneideinheiten 12 sind optional jeweils insgesamt verstellbar ausgebildet und eingerichtet. Mittels (nicht explizit dargestellten) Stellmitteln, die ebenfalls mit der Steuerungseinrichtung 23 verbunden sein können, lassen sich z.B. die Messerträger 13 verstellen, um die Distanz und/oder den Winkel der Kreismesser 15 zum zu verarbeitenden Produkt variabel einstellen zu können.

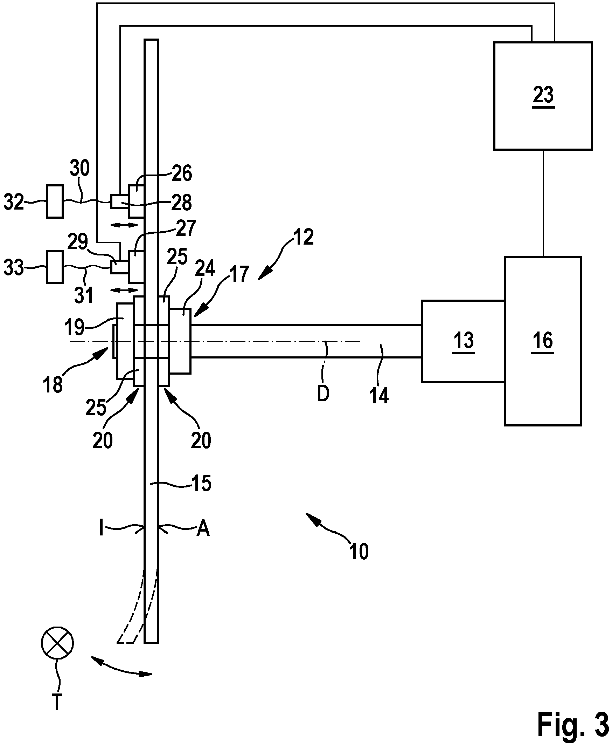

In der Ausführungsform gemäß Figur 1 ist das Kreismesser 15 auf der Messerwelle 14 zwischen einem Anschlag 17 der Messerwelle 14 und einem auf der Seite des freien Endes 18 der Messerwelle 14 angeordneten Sicherungsmittel 19 gehalten und fixiert. Die Ausführungsform gemäß Figur 3 ist grundsätzlich vergleichbar aufgebaut. Allerdings ist in der Ausführungsform gemäß Figur 3 wahlweise zwischen dem Kreismesser 15 und dem Anschlag 17 und/oder zwischen dem Kreismesser 15 und dem Sicherungsmittel 19 mindestens ein Ausgleichselement 20 angeordnet.

In einer nicht explizit dargestellten Ausführungsform ist nur ein Ausgleichselement 20 vorgesehen, derart, dass gegen den Anschlag 17 ein Ausgleichselement 20, dann das Kreismesser 15 und dann das Sicherungsmittel 19 auf der Messerwelle 14 "aufgefädelt" sind. Das Sicherungsmittel 19 sorgt dafür und ist dazu ausgebildet - in dieser und in allen anderen Ausführungsformen -, die zwischen dem Sicherungsmittel 19 und dem Anschlag 17 befindlichen Komponenten mit einer definierten Spannkraft bzw. einem definierten Spanndruck zu fixieren. Die Komponenten können direkt auf der Messerwelle 14 angeordnet sein. In anderen Ausführungsformen können die Komponenten auch auf einer axial/linear auf der Messerwelle 14 bewegbaren Hülse oder dergleichen angeordnet sein, wobei die Hülse relativ zur Messerwelle 14 gegen eine Federspannung oder dergleichen bewegbar ausgebildet und eingerichtet ist.

In der Ausführungsform gemäß der Figuren 1 und 3 ist die Messerwelle 14 mit einem Ende in dem Messerträger 13 gelagert. Das freie Ende 18 der Messerwelle 14 ragt aus dem Messerträger 13 heraus und weist in Richtung der zu verarbeitenden Produkte. In der bzw. auf der Messerwelle 14 ist ein Absatz 24 gebildet, der den Anschlag 17 für das Kreismesser 15 bildet. Das Kreismesser 15 liegt in der Ausführungsform gemäß Figur 1 direkt am Anschlag 17 an. In der Ausführungsform gemäß Figur 3 liegt das Kreismesser 15 nicht direkt am Anschlag 17 an, sondern an einem Ausgleichselement 20. An dem Ausgleichselement 20 liegt das Kreismesser 15 an. Dann folgt wiederum ein Ausgleichselement 20, dass zwischen dem Kreismesser 15 und dem freien Ende 18 der Messerwelle 14 liegt (siehe Figur 3). Die beiden Ausgleichselemente 20 sowie das Kreismesser 15 werden dann mittels des Sicherungsmittels 19, das eine einfache Schraube sein kann, gegen den Anschlag 17 gedrückt gehalten. Beide Ausgleichselemente 20 sind als flexibles Dichtelement 25, in der gezeigten Ausführungsform als flexibler O-Ring, ausgebildet.

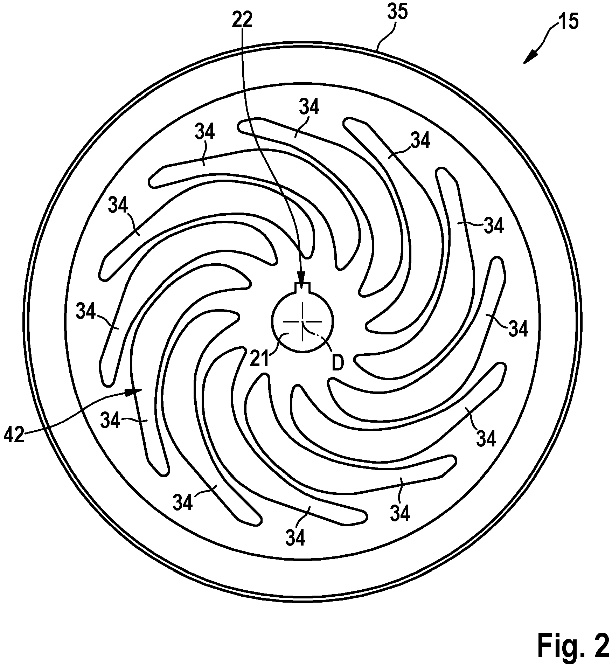

In der Ausführungsform gemäß der Figur 3 sind zwei Gleitkörper 26, 27 vorgesehen, die radial beabstandet zur Messerwelle 14 angeordnet und gegen das Kreismesser 15 drückbar ausgebildet sind. Beide Gleitkörper 26, 27 sind außerhalb des Eingriffsbereichs des Kreismessers 15 in das zu verarbeitende Produkt und - da die Vorrichtung 10 zum Freischneiden von Rückengräten 37 ausgebildet und eingerichtet ist - oberhalb der Drehachse D der Messerwelle 14 angeordnet. Die Gleitkörper 26, 27 sind auf der dem zu verarbeitenden Produkt zugewandten Innenseite I des Kreismessers 15 positioniert. Jedem Gleitkörper 26, 27 ist ein Stellmittel 28, 29 zugeordnet, mittels dem der Gleitkörper 26, 27 bewegbar und insbesondere auf das Kreismesser 15 zu und von diesem weg verstellbar ist (siehe insbesondere die Bewegungspfeile in Figur 2). Die Stellmittel 28, 29 sind ebenfalls mit der Steuerungseinrichtung 23 verbunden. Eine bevorzugte und in Figur 3 dargestellte Ausführungsform der Vorrichtung 10 weist bei jedem Gleitkörper 26, 27 mindestens eine Durchgangsbohrung auf, an die ein Anschlusselement für Kühlmittel anschließbar ist. Beispielhaft ist die Durchgangsbohrung über eine Leitung 30, 31 mit einem Wasserreservoir 32, 33 verbunden. Durch (nicht explizit dargestellte) Pumpen oder dergleichen ist das Wasser in den Kontaktbereich von Gleitkörper 26, 27 und Kreismesser 15 förderbar.

In der dargestellten Ausführungsform ist jeder der beiden Gleitkörper 26, 27 aktiv steuerbar, und zwar unabhängig voneinander. Das Ansteuern bezieht sich zum einen auf die Verstellbewegung auf das Kreismesser 15 zu und von diesem weg. Zum anderen bezieht sich das Ansteuern auf eine Bewegung zur Positionsveränderung der Gleitkörper, also zur Veränderung der Anlageposition des oder jedes Gleitkörpers 26, 27 am Kreismesser 15, durch (nicht explizit dargestellte) Stellmittel wahlweise radial zur Drehachse D der Messerwelle 14 und/oder um die Drehachse D der Messerwelle 14 herum.

Die Vorrichtung 10 zum Lösen von Fleisch von einem Grätengerüst 11 oder Teilen davon kann als eigenständige und separate Einzeleinheit (siehe insbesondere Figuren 1 und 3) eingesetzt und insbesondere in bestehenden Vorrichtungen nachgerüstet werden. Bevorzugt ist die Vorrichtung 10 zum Lösen von Fleisch von einem Grätengerüst 11 oder Teilen davon aber Bestandteil einer Vorrichtung 36 zum automatischen Verarbeiten von Produkten der Nahrungsmittel verarbeitenden Industrie.

Die dargestellte Vorrichtung 36 ist zum Verarbeiten von geschlachteten, in ihrer Bauchhöhle geöffneten und entweideten Fischen ausgebildet und eingerichtet. Genauer dient die dargestellte Vorrichtung 36 zum Freischneiden von Rückengräten 37, also zum Lösen der Fischfilets vom Grätengerüst 11. Die Vorrichtung 36 umfasst eine Transporteinheit 38, ausgebildet und eingerichtet zum Transportieren der zu verarbeitenden Produkte in Transportrichtung T entlang eines Transportpfads durch mindestens eine Bearbeitungsstation 39, mindestens eine Bearbeitungsstation 39 zum Verarbeiten der Produkte, nämlich eine Vorrichtung 10 zum Lösen von Fleisch von einem Grätengerüst 11 oder Teilen davon, sowie eine Steuerungseinrichtung 23 zum Steuern der Transporteinheit 38 und der oder jeder Bearbeitungsstation 39.

Diese Vorrichtung 36 zeichnet sich erfindungsgemäß dadurch aus, dass die Vorrichtung 10 zum Lösen nach einem oder mehreren der Ansprüche 1 bis 13 ausgebildet und eingerichtet ist. Die Vorrichtung 36 kann weitere Bearbeitungsstationen umfassen, so dass eine schrittweise Verarbeitung der Produkte entlang des Transportpfads gewährleistet ist. Die Transporteinheit 38 umfasst vorzugsweise eine umlaufend angetriebene Transportkette 40, an der mehrere Transportsattel 41 zum Aufnehmen und Halten der zu verarbeitenden Produkte während der Verarbeitung an den unterschiedlichen Bearbeitungsstationen 39 angeordnet sind.

Im Folgenden wird das Verfahrensprinzip anhand der Zeichnung näher erläutert. Das Ausführungsbeispiel wird anhand der Zeichnung für das Freischneiden von Rückengräten eines geschlachteten, in der Bauchhöhle geöffneten und entweideten Fisches beschrieben. Zunächst werden die zu verarbeitenden Produkte, in diesem Fall die Fische, mittels einer Transporteinheit 38 entlang eines Transportpfads in den Bereich mindestens einer Bearbeitungsstation 39 und durch diese hindurch transportiert. In der Bearbeitungsstation 39 werden die Fische verarbeitet, indem Fleisch mittels einer Vorrichtung 10 zum Lösen von Fleisch von einem Grätengerüst 11 oder Teilen davon vom Grätengerüst 11 gelöst werden. Beispielhaft werden die Fische, die auf dem Transportsattel 41 gehalten werden, durch die Vorrichtung 10 zum Lösen des Fleisches transportiert. Dazu passieren die Fische die Vorrichtung 10 zum Lösen zwischen zwei Kreismessern 15, die zu beiden Seiten der Rückengräten 37 platziert sind. Durch den Transport der Fische in Transportrichtung T einerseits und das Rotieren der Kreismesser 15 andererseits wird das Fleisch von den Rückengräten 37 gelöst. Zum automatischen Ausführen der Verarbeitung werden die einzelnen Verfahrensschritte mittels einer Steuerungseinrichtung 23 gesteuert. Die Kreismesser 15 der Vorrichtung 10 zum Lösen des Fleisches werden unabhängig von der Steuerungseinrichtung 23 beim Ausführen des Löseschrittes bezüglich der Position zum Grätengerüst 11 durch ein flexibel ausgebildetes Kreismesser 15 passiv durch das zu verarbeitende Produkt gesteuert.

Die Kreismesser 15 der Vorrichtung 10 zum Lösen des Fleisches werden unabhängig von der Steuerungseinrichtung 23 beim Ausführen des Löseschrittes bezüglich der Position zum Grätengerüst 11 durch eine eine Ausgleichsbewegung des Kreismessers 15 auf einer Messerwelle 14 zulassenden Lagerung des Kreismessers 15 auf der Messerwelle 14 passiv durch das zu verarbeitende Produkt gesteuert. Zunächst werden die Kreismesser 15 in ihre Schneidposition möglichst nahe an die Rückengräten 37 bewegt. Während der Bewegung in Transportrichtung T gleiten die Kreismesser 15 auf den Rückengräten 37 entlang und werden ggf. durch die Rückengräten 37 ausgelenkt. Diese passive Steuerung der Kreismesser 15 ist möglich, da die Kreismesser 15 kippbar auf der Messerwelle 14 gelagert sind.

Vorzugsweise werden die Kreismesser 15 zusätzlich zur passiven Steuerung durch mindestens einen Gleitkörper 26, 27 beim Lösen des Fleisches vom Grätengerüst 11 aktiv gesteuert, indem der oder jeder Gleitkörper 26, 27 aktiv und mit einstellbarem Druck von einer dem zu verarbeitenden Produkt zugewandten Innenseite I des Kreismessers 15 gegen das Kreismesser 15 gedrückt wird. Durch das Drücken der Gleitkörper 26, 27 von innen gegen das Kreismesser 15 oberhalb der Drehachse D der Messerwelle kippen die Kreismesser 15 näher an die Rückengräten 37 heran.

Optional können zwei oder mehr Gleitkörper 26, 27 für jedes Kreismesser 15 separat zueinander angesteuert werden, um an unterschiedlichen Positionen des Kreismessers 15 in Kontakt mit diesem gebracht zu werden. Insbesondere während der Verarbeitung werden die Kontaktflächen zwischen dem oder jedem Gleitkörper 26, 27 und dem Kreismesser 15 gekühlt.

Die Kontaktflächen zwischen dem Gleitkörper 26, 27 und dem Kreismesser 15 können ortsfest sein, also sich stets an derselben Position befinden. Optional kann die Position jedes Gleitkörpers 26, 27 vor und/oder während der Verarbeitung zur Veränderung der Position der Kontaktfläche zwischen dem Gleitkörper 26, 27 und dem Kreismesser 15 radial zu einer Drehachse D der Messerwelle 14 und/oder um die Drehachse D der Messerwelle 14 herum verändert werden.

Besonders bevorzugt wird das Verfahren mit einer Vorrichtung 10, 36 nach einem oder mehreren der Ansprüche 1 bis 14 ausgeführt.

## Patentansprüche

1. Vorrichtung (10), ausgebildet und eingerichtet zum Lösen von Fleisch von einem Grätengerüst (11) oder Teilen davon, umfassend mindestens eine Schneideinheit (12), die mindestens einen Messerträger (13) mit einer drehbar im Messerträger (13) gelagerten Messerwelle (14) umfasst, wobei auf der Messerwelle (14) ein Kreismesser (15) formschlüssig und/oder kraftschlüssig und gegenüber der Messerwelle (14) verdrehfest angeordnet und fixiert ist, sowie einen Antrieb (16) zum rotierenden Antreiben der Messerwelle (14), **dadurch gekennzeichnet, dass** das Kreismesser (15) zusätzlich zu einer Ausnehmung (21) zum Aufbringen auf die Messerwelle (14) und ggf. zur Herstellung des Formschlusses mit der Messerwelle (14) im Bereich einer durch das Kreismesser (15) aufgespannten Kreismesserebene mindestens einen Bereich reduzierter Materialstärke aufweist.

2. Vorrichtung (10) nach Anspruch 1, **dadurch gekennzeichnet, dass** die Materialstärke in dem mindestens einen Bereich null ist, derart, dass mindestens ein Durchbruch (34) gebildet ist.

3. Vorrichtung (10) nach Anspruch 2, **dadurch gekennzeichnet, dass** jeder Durchbruch (34) als eine Öffnung in der durch das Kreismesser (15) aufgespannten Kreismesserebene ausgebildet ist, derart, dass eine Innenfläche (I) des Kreismessers (15) mit einer Außenfläche (A) des Kreismessers (15) verbunden ist.

4. Vorrichtung (10) nach Anspruch 2 oder 3, **dadurch gekennzeichnet, dass** jedes Kreismesser (15) mehrere zusätzliche Durchbrüche (34) aufweist, die als Evolvente oder ähnlich einer Evolvente ausgebildet sind.

5. Vorrichtung (10) nach einem oder mehreren der Ansprüche 2 bis 4, **dadurch gekennzeichnet, dass** jeder Durchbruch (34) beabstandet zur Schneidkante (35) des Kreismessers (15) außerhalb des Eingriffsbereichs des Kreismessers (15) in das zu verarbeitende Produkt ausgebildet ist.

6. Vorrichtung (10) nach einem oder mehreren der Ansprüche 1 bis 5, **dadurch gekennzeichnet, dass** eine Schneidkante (35) jedes Kreismessers (15) zwei Fasen (43, 44) aufweist, wobei die dem zu lösenden Fleisch zugewandte Fase (44) länger ist als die dem Fleisch abgewandte Fase (43).

7. Vorrichtung nach einem oder mehreren der Ansprüche 1 bis 6, **dadurch gekennzeichnet, dass** die Fläche der Durchbrüche (34) bezogen auf die Gesamtfläche der Kreismesserebene des Kreismessers (15) etwa 90 % bis 20% und vorzugsweise etwa 60% bis 30% und besonders bevorzugt etwa 50% bis 40% beträgt.

8. Vorrichtung (10) nach einem oder mehreren der Ansprüche 1 bis 7, **dadurch gekennzeichnet, dass** das Kreismesser (15) auf der Messerwelle (14) zwischen einem Anschlag (17) der Messerwelle (14) und einem auf der Seite des freien Endes (18) der Messerwelle (14) angeordneten Sicherungsmittel (19) gehalten und fixiert ist, wobei wahlweise zwischen dem Kreismesser (15) und dem Anschlag (17) und/oder zwischen dem Kreismesser (15) und dem Sicherungsmittel (19) mindestens ein Ausgleichselement (20) angeordnet ist.

9. Vorrichtung (10) nach einem oder mehreren der Ansprüche 1 bis 8, **dadurch gekennzeichnet, dass** die Vorrichtung (10) zwei Schneideinheiten (12) umfasst, die vorzugsweise baugleich ausgebildet und im Wesentlichen spiegelsymmetrisch zu beiden Seiten eines Transportpfad für die zu verarbeitenden Produkte beabstandet zueinander angeordnet sind, derart, dass zwischen den beiden Kreismessern (15) ein Transportpfad für die zu verarbeitenden Produkte gebildet ist.

10. Vorrichtung (10) nach einem oder mehreren der Ansprüche 1 bis 9, **dadurch gekennzeichnet, dass** mindestens ein Gleitkörper (26, 27) vorgesehen ist, der radial beabstandet zur Messerwelle (14) angeordnet und gegen das Kreismesser (15) drückbar ausgebildet ist.

11. Vorrichtung (10) nach Anspruch 10, **dadurch gekennzeichnet, dass** der oder jeder Gleitkörper (26, 27) außerhalb des Eingriffsbereiches des Kreismessers (15) in das zu verarbeitende Produkt zur Anlage an der dem zu verarbeitenden Produkt zugewandten Innenseite (I) des Kreismessers (15) angeordnet ist.

12. Vorrichtung (10) nach Anspruch 10 oder 11, **dadurch gekennzeichnet, dass** der oder jeder Gleitkörper (26, 27) aktiv steuerbar ist.

13. Vorrichtung (10) nach einem oder mehreren der Ansprüche 1 bis 12, **dadurch gekennzeichnet, dass** sie eine Steuerungseinrichtung (23) umfasst.

14. Vorrichtung (10) zum automatischen Verarbeiten von Produkten der Nahrungsmittel verarbeitenden Industrie, insbesondere zum Verarbeiten von geschlachteten, in der Bauchhöhle geöffneten und entweideten Fischen, umfassend eine Transporteinheit (38), ausgebildet und eingerichtet zum Transportieren der zu verarbeitenden Produkte in Transportrichtung T entlang eines Transportpfads durch mindestens eine Bearbeitungsstation (39), mindestens eine Bearbeitungsstation (39) zum Verarbeiten der Produkte, nämlich eine Vorrichtung (10) zum Lösen von Fleisch von einem Grätengerüst (11) oder Teilen davon, sowie eine Steuerungseinrichtung (23) zum Steuern der Transporteinheit (38) und der oder jeder Bearbeitungsstation (39), **dadurch gekennzeichnet, dass** die Vorrichtung (10) zum Lösen nach einem oder mehreren der Ansprüche 1 bis 13 ausgebildet und eingerichtet ist.

15. Verfahren zum automatischen Verarbeiten von Produkten der Nahrungsmittel verarbeitenden Industrie, insbesondere zum Verarbeiten von geschlachteten, in der Bauchhöhle geöffneten und entweideten Fischen, **gekennzeichnet durch** die Schritte:
- Transportieren der zu verarbeitenden Produkte entlang eines Transportpfads in den Bereich mindestens einer Bearbeitungsstation (39) und durch diese hindurch mittels einer Transporteinheit (38)
- Verarbeiten der Produkte in der Bearbeitungsstation (39) mittels derselben,
- indem Fleisch mittels einer Vorrichtung (10) zum Lösen von Fleisch von einem Grätengerüst (11) oder Teilen davon vom Grätengerüst (11) gelöst wird, wobei
- die Verfahrensschritte zum automatischen Ausführen mittels einer Steuerungseinrichtung (23) gesteuert werden, und
- ein Kreismesser (15) der Vorrichtung (10) zum Lösen des Fleisches unabhängig von der Steuerungseinrichtung (23) beim Ausführen des Löseschrittes bezüglich seiner Position zum Grätengerüst (11) durch ein flexibel ausgebildetes Kreismesser (15) passiv durch das zu verarbeitende Produkt gesteuert wird.

16. Verfahren nach Anspruch 15, **dadurch gekennzeichnet, dass** das Kreismesser (15) unabhängig von der Steuerungseinrichtung (23) beim Ausführen des Löseschrittes bezüglich seiner Position zum Grätengerüst (11) durch eine eine Ausgleichsbewegung des Kreismessers (15) auf einer Messerwelle (14) zulassenden Lagerung des Kreismessers (15) auf der Messerwelle (14) passiv durch das zu verarbeitende Produkt gesteuert wird.

17. Verfahren nach Anspruch 15 oder 16, **dadurch gekennzeichnet, dass** das Kreismesser (15) zusätzlich zur passiven Steuerung durch mindestens einen Gleitkörper (26, 27) beim Lösen des Fleisches vom Grätengerüst (11) aktiv gesteuert wird, indem der oder jeder Gleitkörper (26, 27) aktiv und mit einstellbarem Druck von einer dem zu verarbeitenden Produkt zugewandten Innenseite (I) des Kreismessers (15) gegen das Kreismesser (15) gedrückt wird.

18. Verfahren nach Anspruch 17, **dadurch gekennzeichnet, dass** zwei oder mehr Gleitkörper (26, 27) separat zueinander angesteuert werden, um an unterschiedlichen Positionen des Kreismessers (15) in Kontakt mit diesem gebracht zu werden.

19. Verfahren nach Anspruch 17 oder 18, **dadurch gekennzeichnet, dass** die Kontaktfläche zwischen dem oder jedem Gleitkörper (26, 27) und dem Kreismesser (15) mindestens während der Verarbeitung gekühlt wird.

20. Verfahren nach einem oder mehreren der Ansprüche 17 bis 19, **dadurch gekennzeichnet, dass** die Position jedes Gleitkörpers (26, 27) vor und/oder während der Verarbeitung zur Veränderung der Position der Kontaktfläche zwischen dem Gleitkörper (26, 27) und dem Kreismesser (15) radial zu einer Drehachse (D) der Messerwelle (14) und/oder um die Drehachse (D) der Messerwelle (14) herum verändert wird.

21. Verfahren nach einem oder mehreren der Ansprüche 15 bis 20, **dadurch gekennzeichnet, dass** es mit einer Vorrichtung (10, 36) nach einem oder mehreren der Ansprüche 1 bis 14 ausgeführt wird.
